# EUROPÄISCHE PATENTSCHRIFT

(11) **EP 1 805 914 B1**
(45) Veröffentlichungstag und Bekanntmachung des Hinweises auf die Patenterteilung: **16.12.2009**
(21) Anmeldenummer: 05810932.3
(22) Anmeldetag: 26.10.2005
(51) Int. Cl.: H04B 10/08

(54) **VERFAHREN ZUR ÜBERWACHUNG EINER OPTISCHEN ÜBERTRAGUNGSSTRECKE MITTELS EINES OPTISCHEN VERSTÄRKERS UND OPTISCHER VERSTÄRKER HIERFÜR**
METHOD FOR MONITORING AN OPTICAL TRANSMISSION LINK BY MEANS OF AN OPTICAL AMPLIFIER, AND CORRESPONDING OPTICAL AMPLIFIER
PROCEDE DE CONTROLE D'UNE VOIE DE TRANSMISSION OPTIQUE AU MOYEN D'UN AMPLIFICATEUR OPTIQUE ET AMPLIFICATEUR OPTIQUE DESTINE A CET EFFET

(30) Priorität: 26.10.2004 DE 102004052150
(43) Veröffentlichungstag der Anmeldung: 11.07.2007
(73) Patentinhaber: Adva AG Optical Networking, 82152 Martinsried (DE)
(72) Erfinder: FRIEDRICH, Lars, 81669 München (DE)
(74) Vertreter: Eder, Christian
(86) Internationale Anmeldenummer: PCT/DE2005/001924
(87) Internationale Veröffentlichungsnummer: WO 2006/045292

(56) Entgegenhaltungen:
- US-A1- 2001 033 413
- US-A1- 2001 040 721

## Beschreibung

Die Erfindung betrifft ein Verfahren zur Überwachung einer optischen Übertragungsstrecke mittels eines optischen Verstärkers, insbesondere eines Raman Verstärkers und einen hierfür geeigneten optischen Verstärker.

Bei der Übertragung von optischen Signalen über große Entfernungen finden in der Praxis häufig optische Verstärker Verwendung, da diese mit weniger Aufwand zu realisieren sind als dies bei einer Signalverstärkung durch die optischelektrische Wandlung der Signale, einer rein elektrischen Verstärkung und gegebenenfalls Signalaufbereitung und einer sich daran anschließenden elektrischoptischen Wandlung möglich wäre. Die optische Signalverstärkung ist dabei auch in solchen Fällen möglich, in denen nicht nur ein Signal mit einer einzigen Wellenlänge, sondern ein Wellenlängenmultiplexsignal übertragen wird.

Neben der optischen Signalverstärkung mittels eines sogenannten EDFA (Erbium Doped Fiber Amplifier) besteht die Möglichkeit, die optische Signalverstärkung unter Nutzung des Raman-Effekts durchzuführen. Die letztgenannte Möglichkeit bietet den Vorteil, dass in die Übertragungsstrecke keine speziell gefertigte Faser eingesetzt werden muss. Der Raman-Effekt, ein nicht-linearer optischer Effekt, tritt auch bei der Einkoppelung entsprechend hoher Pumpleistungen in konventionelle optische Lichtwellenleiter auf. Für im Wesentlichen aus Silizium bestehende Fasern tritt die maximale optische Verstärkung bei einem Frequenzabstand von ca. 13 THz von der Pumpwellenlänge in Richtung hin zu größeren Wellenlängen auf. Der Verlauf der Verstärkung zwischen der Pumpwellenlänge um dem Maximum der Verstärkung ist dabei im Wesentlichen linear ansteigend.

Bei der Verwendung von Verstärkern, die derart große Pumpleistungen in die Übertragungsstrecke einkoppeln, muss dafür Sorge getragen werden, dass es bei einem Auftrennen der Übertragungsstrecke, sei es durch das Trennen einer Steckverbindung oder bei einem Bruch des Signal übertragenden Lichtwellenleiters, durch die dann aus der Übertragungsstrecke austretende hohe optische Leistung nicht zu einer Gefährdung von Personen kommt.

Ist eine Übertragungsstrecke bereits in Betrieb, so erfolgt die Überwachung hinsichtlich eines Auftrennens der Übertragungsstrecke regelmäßig auf einfache Weise durch das Detektieren eines Signalverlusts. Hierbei wird ein LOS (Loss of Signal) Signal erzeugt, das dann dazu verwendet wird, die Signalquellen und ggf. auch Pumpquellen abzuschalten oder hinsichtlich ihrer Leistung zumindest soweit herunterzufahren, dass keine Gefährdung von Personen oder auch Gegenständen mehr zu befürchten ist.

Dieses Verfahren zum Schutz von Personen lässt sich jedoch nicht durchführen, wenn noch keine Kommunikationsverbindung zwischen den Endpunkten einer Übertragungsstrecke besteht. Beim Etablieren einer Kommunikationsverbindung, d.h. beim Aktivieren der Signalübertragungsquellen bzw. Pumpquellen von optischen Verstärkern muss jedoch ebenfalls dafür Sorge getragen werden, dass im Fall einer offenen Übertragungsstrecke aus dem betreffenden offenen Ende, bei dem es sich sowohl um einen gezogenen Stecker als auch um einen Faserbruch handeln kann, keinerlei Gefahrenpotential erzeugt wird. Insbesondere sind hierbei Vorgaben hinsichtlich des Einhaltens von Laserschutzklassen einzuhalten.

Um in der Praxis ein derartiges Gefahrenpotential zu vermeiden ist es beispielsweise aus der US 2003/0179987 A1 bekannt, im Fall einer optischen Wellenlängenmultiplex-(WDM) Übertragungseinrichtung die Pumpleistung einer Raman-Pumpe mittels einer separaten Faser erst unmittelbar vor der Übertragungsstrecke mittels einer Bypass-Koppeleinheit in die Übertragungsstrecke einzukoppeln. Die optischen Sende- und Empfangssignale werden jedoch von den eigentlichen Empfängern bzw. Sendern über ein separates Rack geführt, das beispielsweise ein Patch-Panel umfassen kann. Ein derartiges Patch-Panel dient zur Herstellung optischer Verbindungen durch das Stecken entsprechender Patch-Kabel. Da an diesem Patch-Panel häufig Steckverbindungen gelöst und hergestellt werden, wäre es ein hohes Risiko, auch die Pumpleistung über dieses Patch-Panel zu führen. Das Verwenden einer Bypass-Faser gewährt demgegenüber eine deutlich höhere Sicherheit. Zudem umfasst die Bypass-Koppeleinheit Sensoren für das Erfassen der Pumpleistung bzw. der Leistung des WDM-Signals. Ein Controller, der die Signale der Sensoren auswertet, kann abhängig von bestimmten Situationen Shutter, die im WDM-Signalpfad bzw. im Pfad des Pumpsignals vorgesehen sind, öffnen bzw. schließen. In gleicher Weise kann der Controller die Raman-Pumpe nach dem Detektieren einer gefährdenden Situation abschalten.

Ein derartiges System gewährleistet jedoch nicht, das Detektieren von Situationen, in denen die Übertragungsstrecke des WDM-Signals zwischen den beiden Endpunkten nicht korrekt besteht.

Aus der US 6,621,620 B2 ist ein optisches Verstärkersystem bekannt, bei dem eine offene Übertragungsstrecke detektiert und bei Detektieren eines derartigen Zustands die Pumpquelle deaktiviert wird. Für das Detektieren einer offenen Übertragungsstrecke wird das Signal ausgewertet, das beispielsweise an offenen Steckverbindungen, d.h. gelösten Steckern, oder auch an glatten, senkrechten Brüchen einer Faser reflektiert wird. Da das Pumpsignal jedoch mittels eines Filters blockiert wird, kann nur das reflektierte Signal detektiert werden, welches sich infolge einer Reflexion des Nutzsignals ergibt.

Zwar ermöglicht ein derartiges System das Erkennen von offenen Steckverbindungen bzw. von Faserbrüchen. Es wird jedoch nur in solchen Fällen eine gestörte Kommunikationsverbindung erkannt, in denen eine ausreichend hohe Signalleistung reflektiert wird. Dies ist jedoch im Wesentlichen nur bei ausreichend glatten und senkrecht zur Ausbreitungsrichtung verlaufenden Endflächen der Fall. Faserbrüche mit schrägen oder vollkommen unregelmäßigen Endflächen sind jedoch auf diese Weise ebenso wenig detektierbar wie spezielle Stecker, die zur Vermeidung von Fresnel-Reflexionen schräg abgeschliffen wurden.

Aus der EP 1 229 382 A1 ist ein den Raman-Effekt nutzender optischer Verstärker bekannt, mit dem die Überwachung einer damit verbundenen optischen Übertragungsstrecke ermöglicht ist. Hierzu wird von dem Verstärker das infolge der Raman-Verstärkung erzeugte Rauschsignal detektiert. Der Verstärker berechnet abhängig von der Pumpleistung die zu erwartende Leistung des entgegen der Pumpleistung in der Übertragungsstrecke zurückgeführten Rauschsignals und ermittelt abhängig hiervon einen Schwellwert, bei dessen Unterschreiten eine Unterbrechung der Übertragungsstrecke angenommen wird. Diese Verfahrensweise eignet sich insbesondere zur Überwachung einer laufenden Übertragungsstrecke.

Schließlich ist aus der US 6,807,001 B1 ein Verfahren und eine Vorrichtung zur Überwachung einer optischen Übertragungsstrecke bekannt, wobei ein in der Übertragungsstrecke entgegen der Pumpleistung rückgestreutes ASE Signal detektiert wird. Die Überwachung erfolgt im vollen Betrieb der Übertragungsstrecke, so dass bei einem Unterschreiten eines vorgegebenen Schwellwerts für das ASE Signal eine Unterbrechung der Übertragungsstrecke angenommen und die Pumpquelle abgeschaltet wird.

Auch dieses Verfahren zur Überwachung einer optischen Übertragungsstrecke wird während des vollen Betriebs der Übertragungsstrecke durchgeführt.

Ausgehend von diesem Stand der Technik liegt der Erfindung daher die Aufgabe zugrunde, ein Verfahren zur Überwachung einer optischen Übertragungsstrecke mittels eines optischen Verstärkers, insbesondere eines Raman-Verstärkers, zu schaffen, das sicherstellt, dass auch solche Unterbrechungen einer Übertragungsstrecke sicher erkannt werden, die keinerlei oder allenfalls sehr geringe Fresnel-Reflexionen erzeugen und bereits vor dem Hochfahren des optischen Verstärkers vorliegen. Des Weiteren liegt der Erfindung die Aufgabe zugrunde, eine optische Verstärkereinheit zur Durchführung des Verfahrens zu scharfen.

Die Erfindung löst diese Aufgabe mit den Merkmalen der Patentansprüche 1 bzw. 11.

Die Erfindung geht von der Erkenntnis aus, dass die beim Einkoppeln des Pumpsignals in die Übertragungsstrecke auftretende spontane Emission und das hierdurch verursachte ASE (Amplified Spontaneous Emission) Signal dazu verwendet werden kann, um festzustellen, ob innerhalb der effektiven Länge der Übertragungsstrecke, in der infolge der ausreichen hohen Pumpleistung eine nutzbare Raman-Verstärkung auftritt, eine Unterbrechung der Übertragungsstrecke vorliegt. Hierzu wird eine ausreichend hohe Pumpleistung in die Übertragungsstrecke eingekoppelt und das entgegen der Ausbreitungsrichtung des Pumpsignals in Richtung auf die Pumpquelle zurückgeführte ASE Signal detektiert. Die Leistung dieses ASE Signals, die in nicht-linearer Form von der Leistung der Pumpquelle abhängig ist, wird ermittelt und mit einem Schwellwert verglichen, der bei der jeweiligen Pumpleistung im Fall einer ungestörten Übertragungsstrecke zu erwarten wäre. Ist die Leistung des detektierten ASE Signals kleiner als der vorgegebene Schwellwert, gegebenenfalls unter Berücksichtigung einer zulässigen Toleranz, so wird ein Fehlersignal erzeugt. Das Fehlersignal weist darauf hin, dass die Übertragungsstrecke unterbrochen ist oder jedenfalls nicht korrekt funktioniert.

Die detektierte Leistung des ASE Signals kann darüber hinaus dazu verwendet werden, um in etwa den Ort einer Unterbrechung zu lokalisieren. Hierzu kann die Abhängigkeit der Leistung des detektierten ASE Signals von der Länge der korrekt arbeitenden Übertragungsstrecke herangezogen werden. Ist die Pumpleistung bekannt, so kann aus der funktionalen Abhängigkeit der Leistung des detektierten ASE Signals von der Länge der korrekt funktionierenden Übertragungsstrecke in Kenntnis der Leistung des detektierten ASE Signals die Länge der Übertragungsstrecke bis zur Unterbrechung ermittelt werden.

Erfindungsgemäß wird die Pumpleistung des optischen Verstärkers moduliert, insbesondere amplitudenmoduliert. Auf diese Weise kann das ASE Signal phasensensitiv, beispielsweise mittels eines Lock-in Verstärkers, detektiert werden. Auf diese Weise kann ein ASE Signal mit sehr geringer Leistung mit hoher Genauigkeit detektiert werden. Die Pumpleistung muss daher zunächst nur auf einen Wert eingestellt werden, der nur geringfügig höher liegt als der Wert, bei dem der Raman-Effekt eintritt. Hierdurch wird das Gefahrenpotential im Fall einer offenen Übertragungsstrecke reduziert.

Die Pumpleistung kann auf diese Weise, gegebenenfalls in mehreren Schritten oder kontinuierlich unter gleichzeitigem Detektieren des ASE Signals bis zum Erreichen des Maximalwerts der Pumpleistung erhöht werden, der für den Betricb der Übertragungsstrecke gewünscht ist. Hierdurch ergibt sich eine erhöhte Sicherheit. Denn mit zunehmender Pumpleistung vergrößert sich die effektive Länge der Übertragungsstrecke, innerhalb der die Leistung so groß ist, dass nicht-lineare Effekte auftreten. Liegt eine Unterbrechung der Übertragungsstrecke jenseits der effektiven Länge bei einer geringen Pumpleistung, so wird in diesem Fall noch ein ausreichend hohes ASE Signal erfasst. Liegt der Ort der Unterbrechung jedoch bei einer Erhöhung der Pumpleistung innerhalb der effektiven Länge, so wird in diesem Fall eine Unterbrechung der Übertragungsstrecke detektiert.

Das Fehlersignal kann dazu herangezogen werden, um die Pumpquelle sofort nach dem Erzeugen des Fehlersignals zu deaktivieren. Da das ASE Signal praktisch zeitgleich mit dem Vorliegen einer ausreichend hohen Pumpleistung erzeugt wird und praktisch ohne Zeitverzögerung detektierbar ist, kann die Pumpquelle so schnell deaktiviert werden, dass keinerlei Gefährdungspotential am Ort der Unterbrechung der Übertragungsstrecke erzeugt wird.

Selbstverständlich kann bei Auftreten eines Fehlersignals auch eine optische oder akustische Fehlermeldung und/oder ein Bedienerruf erzeugt werden.

Das Verfahren nach der Erfindung eignet sich insbesondere auch zur Überwachung einer optischen Übertragungsstrecke in der Phase des Hochfahrens eines optischen Verstärkers, d.h. beim Einschalten der Pumpleistung. Die Pumpleistung kann im einfachsten Fall sofort auf den Maximalwert oder auf einen kleineren Wert eingestellt werden, der jedoch so zu bemessen ist, dass noch der Raman-Effekt auftritt und somit ein ASE Signal detektiert werden kann. Der letztgenannte Fall einer kleineren Pumpleistung als der beim üblichen Betrieb der Übertragungsstrecke vorliegende Maximalwert (dieser kann selbstverständlich kleiner sein als der Wert der maximal von der Pumpe erzeugbaren Pumpleistung) führt jedoch zu dem Vorteil, dass im Fall einer unterbrochene Übertragungsstrecke aus dem freien Ende eine geringere Leistung austritt.

Selbstverständlich kann die Pumpleistung auch kontinuierlich oder schrittweise erhöht und jeweils die Leistung des zugehörigen ASE Signals erfasst werden. Dabei kann für jeden "Betriebspunkt" während des Erhöhens die ermittelte Leistung des ASE Signals mit einem korrespondierenden Schwellwert verglichen werden. Jeder Schwellwert kann in der vorstehend erläuterten Weise entweder theoretisch oder im Rahmen eines Kalibriervorgangs ermittelt werden. Die Kalibrierung wird, wie vorstehend erläutert, mit korrekt funktionierender Übertragungsstrecke ermittelt. Jeder Schwellwert kann, zugeordnet zur betreffenden Pumpleistung, abgespeichert werden.

Ein Fehlersignal kann für den Fall, dass mehrere ASE Signale für unterschiedliche Pumpleistungen oder ein kontinuierlicher Verlauf des ASE Signals für einen kontinuierlich durchfahrenen Bereich der Pumpleistung ermittelt wird, beispielsweise dann erzeugt werden, wenn die für mehrere oder für alle unterschiedlichen Werte für die Pumpleistung detektierten Werte für die Leistung des zugehörigen ASE Signals ein Unterschreiten des betreffenden Schwellwertes, gegebenenfalls unter Berücksichtigung einer zulässigen Toleranz, festgestellt wird. Selbstverständlich sind hier auch andere mathematische Verfahren und Kriterien denkbar, die zur Erzeugung eines Fehlersignals abhängig von einem oder mehreren erfassten Werten für die Leistung des ASE Signals bei jeweils zugehörigen Pumpleistungen und abhängig von theoretisch oder empirisch bestimmten Schwellwerten bzw. zu erwartenden Werten für die Leistung des ASE Signals bei korrekter Übertragungsstrecke eingesetzt werden können.

Nach einer Ausführungsform der Erfindung kann in einem vorgeschalteten Verfahrensschritt die Pumpleistung auf einen Wert eingestellt werden, bei dem in der Übertragungsstrecke noch keine nicht-linearen optischen Effekte auftreten. Anstelle der Leistung eines ASE Signals kann dann die Leistung von möglicherweise auftretenden reflektierten Signalanteilen detektiert werden. Bei Überschreiten eines vorbestimmten Schwellwerts kann dann ein Reflexions-Fehlersignal erzeugt werden. Dies kann ebenfalls dazu genutzt werden, um die Pumpquelle wieder vollständig abzuschalten bzw. eine optische oder akustische Fehlermeldung auszugeben oder einen Bedienerruf zu erzeugen. Wird bereits ein Reflexions-Fehlersignal erzeugt, so ist kein Erhöhen der Pumpleistung auf einen Wert erforderlich, bei dem der Raman-Effekt eintritt und ein ASE Signal erzeugt wird. Denn in diesem Fall kann bereits infolge des linearen Effekts der Reflexion auf eine gestörte Übertragungsstrecke geschlossen werden.

Die Modulation der Pumpleistung kann auch derart erfolgen, dass die zeitlich gemittelte Pumpleistung unterhalb eines vorbestimmten Grenzwertes liegt, z.B. durch eine Pulsbreitenmodulation mit einem entsprechenden Tastverhältnis (Einschaltdauer klein gegen die Ausschaltdauer). Auch auf diese Weise wird in Verbindung mit der schnellen Reaktionszeit bis zum Abschalten der Pumpleistung nach dem Detektieren eines Fehlersignals die Sicherheit erhöht und gegebenenfalls das Einhalten einer bestimmten Laserschutzklasse gewährleistet.

Weitere Ausführungsformen der Erfindung ergeben sich aus den Unteransprüchen.

Die Erfindung wird nachfolgend anhand eines in der Zeichnung dargestellten Ausführungsbeispiels näher erläutert. In der Zeichnung zeigen
- Fig. 1: eine schematische Darstellung einer WDM-Übertragungsstrecke mit einem optischen Verstärker nach der Erfindung;
- Fig. 2: ein Diagramm mit einer schematischen Darstellung der Leistung, die von einer Pumpquelle und von mehreren optischen Sendern in Form eines WDM-Signals in die Übertragungsstrecke eingekoppelt wird und
- Fig. 3: ein Diagramm, das schematisch den Verlauf der Leistung des Nutzsignals und den Verlauf der Pumpleistung über die Länge der Übertragungsstrecke darstellt.

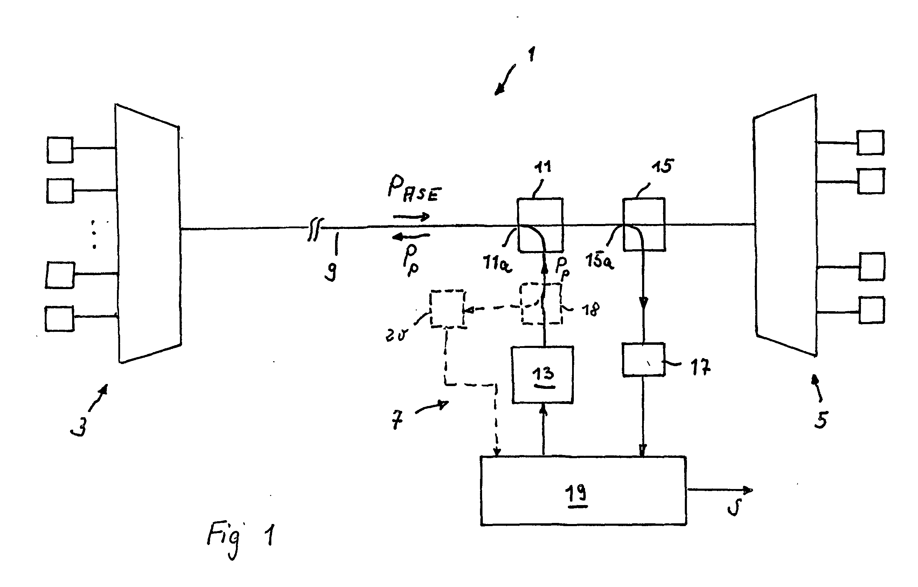

Das in Fig. 1 dargestellte WDM-Übertragungssystem umfasst eine WDM-Sendeenheit 3 und eine WDM-Empfangseinheit 5. Aus Gründen der Einfachheit ist zur Erläuterung der vorliegenden Erfindung ein unidirektionales WDM-Übertragungssystem dargestellt, ohne dass dies die Tragweite der Erfindung auch für bidirektionale Übertragungssysteme einschränkt.

Das WDM-Übertragungssystem 1 umfasst des Weiteren eine optische Verstärkereinheit 7, die vorzugsweise eine optische Verstärkung unter Ausnutzen des Raman-Effekts bewirkt, in jedem Fall jedoch eine so hohe optische Pumpleistung in die Übertragungsstrecke 9 einkoppelt, dass der nicht-lineare Raman-Effekt auftritt. Die optische Verstärkereinheit 7 umfasst ihrerseits eine Koppeleinheit 11, die beispielsweise als Schmelzkoppler oder Koppler in integrierter Optik ausgebildet sein kann. Dem Arm der Koppeleinheit 11, der nicht im Signalpfad der Übertragungsstrecke 9 liegt, wird die Pumpleistung Pₚ einer Pumpquelle 13 zugeführt. Die Pumpquelle umfasst beispielsweise einen Pumplaser, der die Pumpleistung bei einer bestimmten Pumpwellenlänge λₚ abgibt. Selbstverständlich kann die Pumpquelle jedoch auch zwei oder mehrere Pumpquellen bei unterschiedlichen Pumpwellenlängen aufweisen, wenn eine optische Verstärkung über eine größere Bandbreite erwünscht ist.

Die Koppeleinheit 11 kann als wellenlängenselektive Koppeleinheit ausgebildet sein. Auf diese Weise ist es möglich, die Pumpleistung bei der Pumpwellenlänge praktisch ohne nennenswerte Verluste in die Übertragungsstrecke 9 einzukoppeln. Umgekehrt kann das WDM-Nutzsignal, welches gegenüber der Pumpwellenlänge oder den Pumpwellenlängen bei höheren Wellenlängen liegt, praktisch verlustfrei über die Koppelstelle der Koppeleinheit 11 hinweg zur WDM-Empfangseinheit übertragen werden. Damit sind in beiden Signalpfaden allenfalls geringe Einifügedämpfungen zu erwarten.

Die optische Verstärkereinheit 7 umfasst des Weiteren eine Koppeleinheit 15, die im Signalpfad zwischen der Koppeleinheit 11 und dem Eingang der WDM-Empfangseinheit 5 liegt. Die Koppeleinheit 15 kann als einfacher, wellenlängenunabhängiger Splitter ausgebildet sein. Sie dient dazu, um von dem am Eingang 15a der Koppeleinheit 15 anliegenden Signal einen bestimmten Bruchteil der Leistung, beispielsweise einige wenige Prozent, abzuzweigen und einem Detektor 17 zuzuführen. Der Detektor 17 erzeugt ein von der Leistung des ihm zugeführten optischen S ignals abhängiges elektrisches Signal und führt dieses einer Steuereinheit 19 zu. Die Steuereinheit 19 dient zur Ansteuerung der Pumpquelle 13 und gegebenenfalls auch für weitere ihr zugeordnete Aufgaben.

Die optische Verstärkereinheit 7 ermöglicht das Überwachen der Übertragungsstrecke 9 in der nachstehend skizzierten Art und Weise:

Die Steuereinheit 19 steuert die Pumpquelle 13, insbesondere beim Einschalten der optischen Verstärkereinheit 7, zunächst so an, dass eine Pumpleistung Pₚ in die Übertragungsstrecke 9 eingekoppelt wird, die so klein ist, dass noch keine nicht-linearen optischen Effekte auftreten. Mittels des Detektors 17 überwacht die Steuereinheit 19, ob im Signalpfad in Richtung auf die optische Empfangseinheit 5 ein Signal mit einer Leistung auftritt, die größer ist als ein vorbestimmter Schwellwert. Ein derartiges Signal kann lediglich dadurch erzeugt werden, dass entlang des Verlaufs der Übertragungsstrecke 9 zwischen dem Port 11 a für die Einkoppelung der Pumpleistung in die Übertragungsstrecke 9 und dem Ausgang für das WDM-Signal der WDM-Sendeeinheit 3 eine Störungsstelle vorliegt, an der eine Reflexion des Pumpsignals auftritt. In diesem Fall erzeugt die Steuereinheit 19 ein Fehlersignal und schaltet die Pumpquelle 13 ab. Ein Hochfahren der Pumpquelle 13 auf höhere Leistungen wird vermieden.

Die vorstehende Erläuterung gilt für den Fall, dass das reflektierten Pumplicht (zumindest ein dektektierbarer Leistungsanteil hiervon) über die Koppeleinheit 11 zur Koppeleinheit 15 gelangen kann. Ist die Koppeleinheit 11 als wellenlängensensitive Koppeleinheit ausgebildet, so wird das reflektierte Signal jedoch in Richtung auf die Pumpquelle 13 geführt. In diesem Fall ist eine weitere Koppeleinheit 18 erforderlich, die das reflektierte Licht zumindest Teilweise auskoppelt und einem weiteren Detektor 20 zuführt (diese Komponenten sind in Fig. 1 gestrichelt angedeutet). Die Koppeleinheit 18 kann beispielsweise als Isolator ausgebildet sein und jegliche optische Leistung in Richtung auf die Pumpquelle in Richtung auf den Detektor 20 auskoppeln. Das Signal des Detektors 20 ist der Steuereinheit 19 zugeführt, die eine Signalauswertung gemäß der vorstehend für das Signal des Detektors 17 erläuterten Weise durchführt.

Da Unterbrechungsstellen bzw. Störungsstellen in der Übertragungsstrecke 9 jedoch auch so beschaffen sein können, dass keinerlei Reflexionen auftreten (wie dies beispielsweise an vollkommen unregelmäßigen oder schrägen Endflächen der Übertragungsfaser der Fall ist), so steuert die Steuereinheit 19 nach Durchführen des vorstehend erläuterten ersten Schritts die Pumpquelle 13 für den Fall, dass kein Reflexionssignal detektiert wurde, so an, dass eine Pumpleistung erzeugt wird, die so groß ist, dass in der Übertragungsstrecke 9 der Raman-Effekt auftritt. In diesem Fall wird innerhalb der effektiven Länge (vgl. unten) der Übertragungsstrecke 9 ein ASE Signal mit der Leistung P_{ASE} erzeugt, welches über die Koppeleinheit 11 der Koppeleinheit 15 und dem Detektor 17 zugeführt wird. Stellt die Steuereinheit 9 infolge des ihr zugeführten Detektorsignals fest, dass das ASE Signal mit einer Leistung P_{ASE} detektiert wurde, die kleiner ist als ein vorgegebener Schwellwert, so geht die Steuereinheit 19 davon aus, dass die Übertragungsstrecke 9 gestört bzw. unterbrochen ist.

In diesem Fall schaltet die Steuereinheit 19 die Pumpquelle 13 sofort aus. Im nächsten Schritt kann dann die Pumpleistung 13 von der Steuereinheit 19 bereits auf den gewünschten Maximalwert zum Betrieb der Übertragungsstrecke hochgefahren werden. Auch in diesem Fall kann mittels des Detektors 17 nochmals die Leistung des ASE Signals für die nunmehr höhere Pumpleistung detektiert und mit einem entsprechenden Schwellwert verglichen werden. Liegt auch diese Leistung P_{ASE} im Bereich des vorgegebenen Schwellwerts bzw. innerhalb einer zulässigen Toleranz, so kann die Steuereinheit 19 ein Freigabesignal S an eine übergeordnete Steuereinheit abgeben, die dann die WDM-Sendeeinheit 3 und die WDM-Empfangseinheit 5 entsprechend ansteuert.

Das Hochfahren der Pumpleistung Pₚ kann jedoch auch schrittweise in Stufen oder kontinuierlich erfolgen. Die Steuereinheit 19 kann in diesem Fall die von der Pumpleistung Pₚ abhängige Leistung P_{ASE} erfassen und mit entsprechenden zugehörigen von der Leistung Pₚ abhängigen Schwellwerten oder dem Verlauf eines Schwellwerts vergleichen. Das Freigabesignal S kann in diesem Fall erst dann erzeugt werden, wenn für sämtliche Werte der Leistung P_{ASE} festgestellt wird, dass diese dem jeweils vorgegebenen Schwellwert entsprechen bzw. innerhalb einer zulässigen Toleranz liegen.

Die Steuereinheit 19 ist vorzugsweise so ausgeführt, dass sie die Pumpquelle 13 für das Hochfahren der optischen Verstärkereinheit 7 so ansteuert, dass ein moduliertes, vorzugsweise amplitudenmoduliertes Pumpsignal erzeugt wird. Auf diese Weise kann die Steuereinheit 19 das ASE Signal, welches in diesem Fall selbstverständlich ebenfalls moduliert ist, phasensensitiv detektieren. Die Steuereinheit kann hierfür einen integrierten Lock-in Verstärker aufweisen (dieser kann selbstverständlich auch als eigenständige Komponente realisiert sein). Dies ermöglicht ein hochgenaues Erfassen auch sehr kleiner Leistungen P_{ASE}.

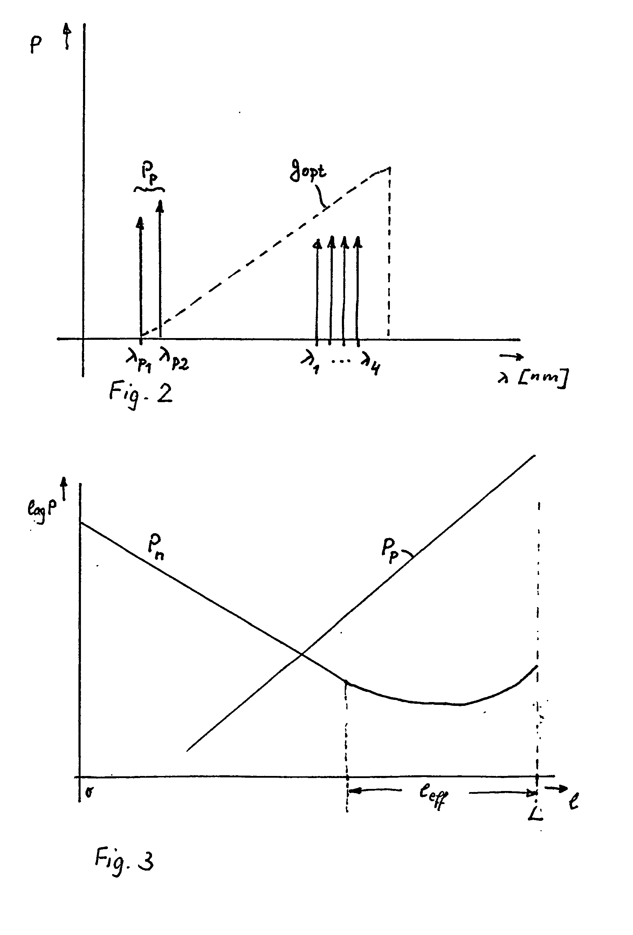

Fig. 2 zeigt schematisch das Spektrum des in der Übertragungsstrecke 9 im normalen Betrieb geführten Signals. Bei dem in Fig. 2 dargestellten Ausführungsbeispiel umfasst die Pumpquelle 13 Sendelemente für zwei Pumpwellenlängen λₚ₁ und λₚ₂. Des Weiteren zeigt Fig. 2 ein WDM-Signal, bestehend aus Teilsignalen bei den Wellenlängen λ₁ bis λ₄. Selbstverständlich ist in Fig. 2 für die Leistung bei den Pumpwellenlängen λₚ₁, λₚ₂ eine andere Skalierung für die Leistung Pₚ anzunehmen als für die Leistungen der Teilsignale des WDM-Signals. Des Weiteren ist in Fig. 2 gestrichelt der Verlauf der optischen Verstärkung gₒₚₜ angedeutet, wobei hierfür ein logarithmischer Maßstab anzusetzen ist.

Aus Fig. 2 wird deutlich, dass die Wellenlängen λₚ₁, λₚ₂ so zu wählen sind, dass sich über die gesamte Bandbreite der Teilsignale bei den Wellenlängen λₚ₁ bis λₚ₄ eine ausreichende, möglichst gleichförmige optische Verstärkung gewährleistet ist.

Fig. 3 verdeutlicht den Verlauf der Pumpleistung Pp und den Verlauf der optischen Nutzleistung Pₙ über die gesamte Länge L der Übertragungsstrecke 9 in Fig. 1. Wie aus Fig. 3 ersichtlich, ist infolge der hohen Pumpleistung Pₚ im Bereich der effektiven Länge L_{eff} eine optische Verstärkung der Leistung Pₙ des Nutzsignals gegeben. Über die effektive Länge L_{eff} wird jedoch wegen der hohen Pumpleistung auch das erfindungsgemäß auszuwertende ASE Signal erzeugt. Erfindungsgemäß kann daher zumindest eine Überwachung der Übertragungsstrecke 9 über eine Länge ausgehend vom Einkoppelpunkt der Pumpleistung bis zur effektiven Länge L_{eff} erzielt werden.

## Patentansprüche

1. Verfahren zur Überwachung einer optischen Übertragungsstrecke mittels eines optischen Verstärkers, insbesondere eines Raman-Verstärkers,
(a) nach dem die von einer Pumpquelle (13) des optischen Verstärkers (7) erzeugte Pumpleistung (Pₚ) in die optische Übertragungsstrecke (9) eingekoppelt wird,
(b) nach dem die Leistung (P_{ASE}) des durch die Pumpleistung (Pₚ) in der Übertragungsstrecke (9) erzeugten, in Richtung auf den optischen Verstärker (7) zurückgeführten Amplified Spontaneous Emission ASE Signals detektiert wird und
(c) nach dem bei Unterschreiten eines vorbestimmten Schwellwertes für die Leistung (P_{ASE}) des detektierten ASE Signals ein Fehlersignal erzeugt wird,
**dadurch gekennzeichnet**,
(d) dass die Pumpleistung (Pₚ) während der Phase des Hochfahrens des optischen Verstärkers (7) moduliert wird und dass das ASE Signal phasensensitiv detektiert wird.

2. Verfahren nach Anspruch 1, **dadurch gekennzeichnet, dass** bei Auftreten eines Fehlersignals die Pumpquelle (13) deaktiviert wird.

3. Verfahren nach Anspruch 1 oder 2, **dadurch gekennzeichnet, dass** bei Auftreten eines Fehlersignals eine Fehlermeldung und/oder ein Bedienerruf erzeugt wird.

4. Verfahren nach einem der vorhergehenden Ansprüche, **dadurch gekennzeichnet, dass** die Pumpleistung (Pₚ) kontinuierlich oder schrittweise erhöht wird und dass das ASE Signal kontinuierlich und/oder schrittweise detektiert und jeweils mit einem mit der jeweiligen Pumpleistung (Pₚ) korrespondierenden Schwellwert verglichen wird.

5. Verfahren nach Anspruch 4, **dadurch gekennzeichnet, dass** ein Fehlersignal erzeugt wird, wenn für die bei mehreren oder bei allen unterschiedlichen Werten für die Pumpleistung (Pₚ) detektieren Werte für die Leistung (P_{ASE}) des zugehörigen ASE Signals ein Unterschreiten des betreffenden Schwellwertes festgestellt wird.

6. Verfahren nach einem der vorhergehenden Ansprüche, **dadurch gekennzeichnet, dass** in einem vorgeschalteten Verfahrensschritt die Pumpleistung (Pₚ) auf einen Wert eingestellt wird, bei dem in der Übertragungsstrecke (9) noch keine nicht-linearen optischen Effekte auftreten und dass die Leistung eines in der Übertragungsstrecke (9) möglicherweise reflektierten Signalanteils detektiert wird und dass bei Überschreiten eines vorbestimmten Schwellwertes für die Leistung eines detektierten reflektieren Signals ein Reflexions-Fehlersignal erzeugt wird.

7. Verfahren nach einem der vorhergehenden Ansprüche, **dadurch gekennzeichnet, dass** die Pumpleistung (Pₚ) während der Phase des Hochfahrens des optischen Verstärkers (7) amplitutenmoduliert wird.

8. Verfahren nach Anspruch 7, **dadurch gekennzeichnet, dass** die Modulation der Pumpleistung (Pₚ) derart erfolgt, dass die zeitlich gemittelte Pumpleistung unterhalb eines vorbestimmen Grenzwertes liegt.

9. Verfahren nach einem der vorhergehenden Ansprüche, **dadurch gekennzeichnet, dass** die Pumpleistung (Pₚ) entgegen der Übertragungsrichtung des optisch zu verstärkenden Signals in die Übertragungsstrecke (9) eingekoppelt wird.

10. Verfahren nach einem der vorhergehenden Ansprüche, **dadurch gekennzeichnet, dass** der pumpleistungsabhängige Schwellwert, die mehreren pumpleistungsabhängigen Schwellwerte oder der pumpleistungsabhängige Verlauf des Schwellwertes für die Leistung (P_{ASE}) des ASE Signals in einem Kalibriervorgang ermittelt werden, wobei der oder die Werte für die Leistung (P_{ASE}) des ASE Signals bei angeschlossener und intakter Übertragungsstrecke (9) abhängig von der Pumpleistung (Pₚ) ermittelt und vorzugsweise gespeichert werden.

11. Optischer Verstärker, insbesondere optischer Raman-Verstärker,
(a) mit einer Koppeleinheit (11) für das Einkoppeln der Pumpleistung (Pₚ) einer optischen Pumpquelle (13) in eine optischen Übertragungsstrecke (9),
(b) mit einer Koppeleinheit (15) für das Auskoppeln des durch die Pumpleistung (Pₚ) in der Übertragungsstrecke (9) erzeugten, in Richtung auf den optischen Verstärker zurückgeführten Amplified Spontaneous Emission ASE Signals,
(c) mit einer Detektoreinheit (17) für das Detektieren des ausgekoppelten ASE Signals und
(d) mit einer Steuereinheit (19) zur Ansteuerung der Pumpquelle (13), welche ein ihr von der Detektoreinheit (17) zugeführtes, der Leistung (P_{ASE}) des detektierten ASE Signals entsprechendes Signal mit einem vorbestimmten Schwellwert vergleicht und welche bei Unterschreiten des Schwellwertes ein Fehlersignal erzeugt,
**dadurch gekennzeichnet**,
(e) dass die Steuereinheit (19) die Pumpquelle (13) während der Phase des Hochfahrens des optischen Verstärkers (7) so ansteuert, dass die Pumpleistung (Pₚ) moduliert wird, und dass die Steuereinheit (19) das ASE Signal während der Phase des Hochfahrens des optischen Verstärkers (7) phasensensitiv detektiert.

12. Optischer Verstärker nach Anspruch 11, **dadurch gekennzeichnet, dass** die Koppeleinheit (11) für das Einkoppeln der Pumpleistung (Pₚ) als wellenlängensensitive Koppeleinheit ausgebildet ist, wobei Wellenlängen die um einen vorbestimmten Betrag größer sind als die Pumpwellenlänge mit geringer Dämpfung im Wesentlichen dem optischen Pfad für ein über die Übertragungsstrecke (9) zu übertragendes Nutzsignal zugeordnet werden und kleinere Wellenlängen mit geringer Dämpfung dem abzweigenden Arm für die Einkopplung der Pumpleistung (Pₚ) zugeordnet werden.

13. Optischer Verstärker nach Anspruch 11 oder 12, **dadurch gekennzeichnet, dass** die Koppeleinheit (15) für das Auskoppeln des ASE Signals als im Wesentlichen wellenlängenunabhängiger Splitter ausgebildet ist, der nur einen geringen Teil der Leistung des ASE Signals auskoppelt.

14. Optischer Verstärker nach einem der Ansprüche 11 bis 13, **dadurch gekennzeichnet, dass** die Steuereinheit (19) die Verfahrensschritte nach einem der Ansprüche 2 bis 10 ausführt.

## Claims

1. Method for monitoring an optical transmission link by means of an optical amplifier, in particular a Raman amplifier,
(a) according to which the pumping power (Pₚ) generated by a pump source (13) of the optical amplifier (7) is coupled into the optical transmission link (9),
(b) according to which the power (P_{ASE}) of the amplified spontaneous emission ASE signal generated by the pumping power (Pₚ) in the transmission link (9) and fed back in the direction of the optical amplifier (7) is detected, and
(c) according to which when a predetermined threshold value for the power (P_{ASE}) of the detected ASE signal is not reached an error signal is generated,
**characterised**
(d) **in that** the pumping power (Pₚ) is modulated during the phase of running up the optical amplifier (7), and in that the ASE signal is detected in a phase-sensitive manner.

2. Method according to claim 1, **characterised in that** when an error signal occurs the pump source (13) is deactivated.

3. Method according to claim 1 or 2, **characterised in that** when an error signal occurs an error message and/or an operator call are/is generated.

4. Method according to one of the preceding claims, **characterised in that** the pumping power (Pₚ) is increased continuously or step by step, and **in that** the ASE signal is detected continuously and/or step by step and is compared in each case with a threshold value corresponding to the respective pumping power (Pₚ).

5. Method according to claim 4, **characterised in that** an error signal is generated if for the values for the power (P_{ASE}) of the associated ASE signal that are detected in the case of a plurality or in the case of all the different values for the pumping power (Pₚ) it is established that the relevant threshold value has not been reached.

6. Method according to one of the preceding claims, **characterised in that** in an advance method step the pumping power (Pₚ) is set to a value at which non-linear optical effects do not yet occur in the transmission link (9), and **in that** the power of a signal portion that is possibly reflected in the transmission link (9) is detected, and **in that** when a predetermined threshold value for the power of a detected reflected signal is exceeded an error reflection signal is generated.

7. Method according to one of the preceding claims, **characterised in that** the pumping power (Pₚ) is amplitude-modulated during the phase of running up the optical amplifier (7).

8. Method according to claim 7, **characterised in that** the modulation of the pumping power (Pₚ) is effected in such a way that the pumping power averaged over time lies below a predetermined limiting value.

9. Method according to one of the preceding claims, **characterised in that** the pumping power (Pₚ) is coupled into the transmission link (9) in opposition to the transmission direction of the signal that is to be amplified optically.

10. Method according to one of the preceding claims, **characterised in that** the threshold value as a function of the pumping power, the plurality of threshold values as a function of the pumping power or the characteristic, as a function of the pumping power, of the threshold value for the power (P_{ASE}) of the ASE signal are ascertained in a calibrating process, with the value or the values for the power (P_{ASE}) of the ASE signal being ascertained, when the transmission link (9) is connected and is intact, as a function of the pumping power (Pₚ) and preferably being stored.

11. An optical amplifier, in particular an optical Raman amplifier,
(a) having a coupling unit (11) for coupling the pumping power (Pₚ) of an optical pump source (13) into an optical transmission link (9),
(b) having a coupling unit (15) for decoupling the amplified spontaneous emission ASE signal that is generated by the pumping power (Pₚ) in the transmission link (9) and is fed back in the direction of the optical amplifier,
(c) having a detector unit (17) for the detection of the ASE signal that has been decoupled, and
(d) having a control unit (19) for activating the pump source (13) which compares a signal that is fed to it from the detector unit (17) and corresponds to the power (P_{ASE}) of the detected ASE signal with a predetermined threshold value and which generates an error signal when the threshold value is not reached,
**characterised in that**
(e) the control unit (19) activates the pump source (13) during the phase of running up the optical amplifier (7) in such a way that the pumping power (Pₚ) is modulated, and the control unit (19) detects the ASE signal in a phase-sensitive manner during the phase of running up the optical amplifier (7).

12. An optical amplifier according to claim 11, **characterised in that** the coupling unit (11) for coupling in the pumping power (Pₚ) is formed as a wavelength-sensitive coupling unit, wherein wavelengths that are greater by a predetermined amount than the pump wavelength with low damping are substantially associated with the optical path for a useful signal that is to be transmitted by way of the transmission link (9) and smaller wavelengths with low damping are associated with the arm that branches off for coupling in the pumping power (Pₚ).

13. An optical amplifier according to claim 11 or 12, **characterised in that** the coupling unit (15) for coupling out the ASE signal is formed as a splitter that is substantially independent of the wavelength and decouples only a small portion of the power of the ASE signal.

14. An optical amplifier according to one of claims 11 to 13, **characterised in that** the control unit (19) carries out the method steps according to one of claims 2 to 10.

## Revendications

1. Procédé de contrôle d'une liaison de transmission optique au moyen d'un amplificateur optique, en particulier un amplificateur à effet Raman,
(a) selon lequel la puissance de pompe (Pₚ), générée par une source de pompage (13) de l'amplificateur optique (7), est injectée dans la liaison de transmission (9),
(b) selon lequel est détectée la puissance (P_{ASE}) du signal ASE à émission spontanée amplifiée, généré dans la liaison de transmission (9) et renvoyé vers l'amplificateur optique (7), et
(c) selon lequel un signal d'erreur est délivré lorsque la puissance (P_{ASE}) du signal ASE détecté est inférieure à une valeur seuil prédéterminée,
**caractérisé**
(d) **en ce que** la puissance de pompe (Pₚ) est modulée pendant la phase de montée en puissance de l'amplificateur optique (7) et en ce que le signal ASE est détecté de manière sensible à la phase.

2. Procédé selon la revendication 1, **caractérisé en ce que** la source de pompage (13) est désactivée lorsqu'un signal d'erreur est délivré.

3. Procédé selon la revendication 1 ou 2, **caractérisé en ce qu'**un message d'erreur et/ou une alarme pour l'utilisateur est généré lorsqu'un signal d'erreur est délivré.

4. Procédé selon l'une quelconque des revendications précédentes, **caractérisé en ce que** la puissance de pompe (Pₚ) est augmentée en continue ou par paliers et **en ce que** le signal ASE est détecté en continu et/ou par paliers et, dans chaque cas, est comparé à une valeur seuil correspondant à la puissance de pompe (Pₚ) respective.

5. Procédé selon la revendication 4, **caractérisé en ce qu'**un signal d'erreur est délivré lorsqu'il est constaté que les valeurs de la puissance (P_{ASE}) du signal ASE associé, détectées en présence de plusieurs ou de toutes les valeurs différentes de la puissance de pompe (Pₚ), sont inférieures à la valeur seuil concernée.

6. Procédé selon l'une quelconque des revendications précédentes, **caractérisé en ce que**, dans une étape précédente, la puissance de pompe (Pₚ) est réglée à une valeur à laquelle il ne se produit pas encore d'effets optiques non linéaires dans la liaison de transmission (9), et **en ce que** la puissance d'une part du signal éventuellement réfléchie dans la liaison de transmission (9) est détectée et **en ce qu'**un signal d'erreur de réflexion est délivré lorsque la puissance d'un signal réfléchi détecté est supérieure à une valeur seuil prédéterminée.

7. Procédé selon l'une quelconque des revendications précédentes, **caractérisé en ce que** la puissance de pompe (Pₚ) est modulée en amplitude pendant la phase de montée en puissance de l'amplificateur optique (7).

8. Procédé selon la revendication 7, **caractérisé en ce que** la modulation de la puissance de pompe (Pₚ) est effectuée de telle sorte que la puissance de pompe moyennée dans le temps se situe en dessous d'une valeur limite prédéterminée.

9. Procédé selon l'une quelconque des revendications précédentes, **caractérisé en ce que** la puissance de pompe (Pₚ) est injectée dans la liaison de transmission (9) dans le sens opposé au sens de transmission du signal optique à amplifier.

10. Procédé selon l'une quelconque des revendications précédentes, **caractérisé en ce que** la valeur seuil qui est fonction de la puissance de pompe, la pluralité de valeurs seuils qui dépendent de la puissance de pompe ou l'évolution de la valeur seuil en fonction de la puissance de pompe sont déterminées pour la puissance (P_{ASE}) du signal ASE dans un processus de calibrage, sachant que, lorsque la liaison de transmission (9) est raccordée et intacte, la ou les valeurs de la puissance (P_{ASE}) du signal ASE sont déterminées en fonction de la puissance de pompe (Pp) et sont, de préférence, mémorisées.

11. Amplificateur optique, en particulier amplificateur optique à effet Raman,
(a) avec un coupleur (11) pour l'injection de la puissance de pompe (Pₚ) d'une source de pompage (13) optique dans une liaison de transmission (9) optique,
(b) avec un coupleur (15) pour la réjection du signal ASE à émission spontanée amplifiée, généré par la puissance de pompe (Pₚ) dans la liaison de transmission (9) et renvoyé vers l'amplificateur optique,
(c) avec une unité de détection (17) pour détecter le signal ASE renvoyé, et
(d) avec une unité de commande (19) destinée à activer la source de pompage (13), par laquelle un signal, acheminé vers ladite unité par l'unité de détection (17) et correspondant à la puissance (P_{ASE}) du signal ASE détecté, est comparé à une valeur seuil prédéterminée et laquelle génère un signal d'erreur lorsque une valeur est inférieure à la valeur seuil,
**caractérisé**
(e) **en ce que** l'unité de commande (19) active la source de pompage (13) pendant la phase de montée en puissance de l'amplificateur optique (7), de telle sorte que la puissance de pompe (Pₚ) est modulée, et en ce que l'unité de commande (19) détecte de manière sensible à la phase le signal ASE pendant la phase de montée en puissance de l'amplificateur optique (7).

12. Amplificateur optique selon la revendication 11, **caractérisé en ce que** le coupleur (11) pour l'injection de la puissance de pompe (Pₚ) est réalisé sous la forme d'un coupleur sensible à la longueur d'onde, sachant que les longueurs d'onde qui sont supérieures selon une valeur prédéfinie à la longueur d'onde de pompage sont associées avec une faible atténuation sensiblement dans la liaison optique pour un signal utile à transmettre via la liaison de transmission (9), et des longueurs d'onde plus petites sont associées avec une faible atténuation à la branche dérivée pour l'injection de la puissance de pompe (Pₚ).

13. Amplificateur optique selon la revendication 11 ou 12, **caractérisé en ce que** le coupleur (15) pour la réjection du signal ASE est réalisé sensiblement sous la forme d'un séparateur indépendant de la longueur d'onde, qui effectue la réjection de seulement une faible partie de la puissance du signal ASE.

14. Amplificateur optique selon l'une quelconque des revendications 11 à 13, **caractérisé en ce que** l'unité de commande (19) exécute les étapes du procédé selon l'une quelconque des revendications 2 à 10.
